# EUROPEAN PATENT APPLICATION

(11) **EP 1 926 313 A2**
(43) Date of publication of application: **28.05.2008**
(21) Application number: 07013039.8
(22) Date of filing: 03.07.2007
(51) Int. Cl.: H04N 5/60

(54) **Method and system for controlling volume settings for multimedia devices**

(30) Priority: 16.11.2006 US 866212 P; 27.04.2007 US 741026
(71) Applicant: Broadcom Corporation, Irvine, CA 92617 (US)
(72) Inventor: Krig, Scott, Irvine CA 92617 (US)
(74) Representative: Jehle, Volker Armin

(57) **Abstract**

A system and method is provided for controlling playback volume memory of multimedia content for a multimedia device and may include adjusting playback volume of multimedia content for a selected channel based on a determined identity of the selected channel and a determined identity of a program associated with the multimedia content. The controlling multimedia device may be tuned to the selected channel or the adjusted playback volume of the multimedia content may be stored to memory. The stored adjusted playback volume may be associated with one or more identities including the selected channel identity, the program identity and/or one or more user identities. The stored adjusted playback volume may be retrieved for subsequent playback of the multimedia content with further adjustment. The adjusting of playback volume of the multimedia content may utilize one or more of a wireless signal, wired signal and/or a voice command.

## Description

### CROSS-REFERENCE TO RELATED APPLICATIONS/INCORPORATION BY REFERENCE

This application makes reference to, claims priority to, and claims the benefit of United States Provisional Application Serial No. 60/866,212 filed on November 22, 2006.

The above stated application is hereby incorporated herein by reference in its entirety.

### FIELD OF THE INVENTION

Certain embodiments of the invention relate to television and/or multimedia devices. More specifically, certain embodiments of the invention relate to a method and system for controlling volume settings for multimedia devices.

### BACKGROUND OF THE INVENTION

Multimedia devices, such as television sets, may access various audio and/or video programming via a plurality of means, such as satellite transmissions, cable and/or aerial transmissions. Some program offerings, when processed by a television device, have a higher volume base threshold when compared to other program offers. When channel surfing, a given program offer on a given channel may be very loud, while another program offer on another channel may be very soft or quiet.

To maximize channel capacities in cable transmission and to prevent piracy, program signals may be transmitted in many different frequencies and may be scrambled. A cable set-top box (STB) may be required to select channel programs and descramble channel program signals into video content for display and audio content for through speakers. A remote controller may be used to surf channels and to adjust volume to users' comfort level. Users may from time to time tune to other channels to skip commercial session to view other programs then return to view their favorite programs to find that they may have to adjust the volume again.

A cable STB descrambles program signals transmitted in certain standard cable format such as the Open Cable Application Platform (OCAP™). The OCAP™ is an operating system layer designed for consumer electronics that connect to a cable television system like Comcast or Cox Cable. Unlike operating systems on a personal computer, the cable company controls what OCAP™ programs run on the consumer's machine. Cable companies that support OCAP™ will enable two way communications by third party devices on cable networks. OCAP™ allows viewers to see program guide and on demand ordering menus. OCAP™ programs may also be utilized for other interactive services such as eCommerce, online banking, Electronic program guides, and digital video recording. Devices that run on OCAP™ include High Definition TV (HDTV), digital video recorders (DVRs), game station, portable video devices, mobile phones, personal computers or wireless devices. All OCAP^{TM} enabled digital TVs may be able to use one TV and one remote to access all cable delivered services may not have the need for a separate STB.

Another form of tuning interface with a cable TV may be the use of a Cablecard. The Cablecard is a small card that slides into a slot on many new high-definition TV sets from nearly every manufacturer. The Cablecard's may replace the use of a STB. The card stores account information that used to be monitored by the STB, like descramblers for the movie channels. Cable companies have required that OCAP™ as part of the Cablecard 2.0 specification. This requirement is being considered by the Federal Communications Commission.

Another form of TV through internet service is an IPTV (Internet Protocol Television). The IPTV is a system where a digital television service is delivered using the Internet Protocol over a network infrastructure, which may include delivery by a broadband connection. For residential users, IPTV is often provided in conjunction with Video on Demand and may be bundled with Internet services such as Web access and VoIP. IPTV is typically supplied by a broadband operator using a closed network infrastructure. This closed network approach is in competition with the delivery of TV content over the public Internet. This type of delivery is widely called TV over Internet or Internet Television. In businesses, IPTV may be used to deliver television content over corporate LANs and business networks.

The OCAP^{TM} enabled TV, the Cablecard and the IPTV may facilitate channel and programs surfing, but the user may still need to adjust the volume upon changing of the current channel and program.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for method and system for controlling volume setting for multimedia devices, substantially as shown in and/or described in connection with at least one of the figures, as set forth more completely in the claims.
According to an aspect of the invention, a method for controlling operation of a multimedia device is provided, the method comprising: adjusting playback volume of multimedia content for a selected channel based on a determined identity of said selected channel presenting said multimedia content and a determined identity of a program associated with said multimedia content.
Advantageously, the method further comprises tuning to said selected channel.
Advantageously, the method further comprises storing to memory, said adjusted playback volume of said multimedia content.
Advantageously, the method further comprises storing to memory, said determined identity of said channel presenting said multimedia content.
Advantageously, the method further comprises storing to memory, said a determined identity of said program associated with said multimedia content.
Advantageously, the method further comprises creating an association between said stored adjusted playback volume of said multimedia content, said determined identity of said channel presenting said multimedia content, and said determined identity of said program associated with said multimedia content.
Advantageously, the method further comprises associating said stored adjusted playback volume of said multimedia content, said determined identity of said channel presenting said multimedia content, and said determined identity of said program associated with said multimedia content, with one or more users.
Advantageously, the method further comprises retrieving said stored adjusted playback volume for subsequent playback of said multimedia content.
Advantageously, the method further comprises adjusting a subsequent playback volume of said multimedia content to said stored adjusted playback volume during said subsequent playback.
Advantageously, the method further comprises adjusting said volume of said multimedia content utilizing one or more of: a wireless signal, a wired signal, and a voice command.
According to an aspect of the invention, a machine-readable storage is provided having stored thereon, a computer program having at least one code section for controlling operation of a multimedia device, the at least one code section being executable by a machine for causing the machine to perform steps comprising, adjusting playback volume of multimedia content for a selected channel based on a determined identity of said selected channel presenting said multimedia content and a determined identity of a program associated with said multimedia content.
Advantageously, said at least one code section comprises code for tuning to said selected channel.
Advantageously, said at least one code section comprises code for storing to memory, said adjusted playback volume of said multimedia content.
Advantageously, said at least one code section comprises code for storing to memory, said determined identity of said channel presenting said multimedia content.
Advantageously, said at least one code section comprises code for storing to memory, said a determined identity of said program associated with said multimedia content.
Advantageously, said at least one code section comprises code for creating an association between said stored adjusted playback volume of said multimedia content, said determined identity of said channel presenting said multimedia content, and said determined identity of said program associated with said multimedia content.
Advantageously, said at least one code section comprises code for associating said stored adjusted playback volume of said multimedia content, said determined identity of said channel presenting said multimedia content, and said determined identity of said program associated with said multimedia content, with one or more users.
Advantageously, said at least one code section comprises code for retrieving said stored adjusted playback volume for subsequent playback of said multimedia content.
Advantageously, said at least one code section comprises code for adjusting a subsequent playback volume of said multimedia content to said stored adjusted playback volume during said subsequent playback.
Advantageously, said at least one code section comprises code for adjusting said volume of said multimedia content utilizing one or more of: a wireless signal, a wired signal, and a voice command.
According to an aspect of the invention, a system is provided for controlling operation of a multimedia device, the system comprising: at least one processor that adjusts playback volume of multimedia content for a selected channel based on a determined identity of said selected channel presenting said multimedia content and a determined identity of a program associated with said multimedia content.
Advantageously, said at least one processor tunes to said selected channel.
Advantageously, said at least one processor stores to memory, said adjusted playback volume of said multimedia content.
Advantageously, said at least one processor stores to memory, said determined identity of said channel presenting said multimedia content.
Advantageously, said at least one processor stores to memory, said a determined identity of said program associated with said multimedia content.
Advantageously, said at least one processor creates an association between said stored adjusted playback volume of said multimedia content, said determined identity of said channel presenting said multimedia content, and said determined identity of said program associated with said multimedia content.
Advantageously, said at least one processor associates said stored adjusted playback volume of said multimedia content, said determined identity of said channel presenting said multimedia content, and said determined identity of said program associated with said multimedia content, with one or more users.
Advantageously, said at least one processor retrieves said stored adjusted playback volume for subsequent playback of said multimedia content.
Advantageously, said at least one processor adjusts a subsequent playback volume of said multimedia content to said stored adjusted playback volume during said subsequent playback.
Advantageously, said at least one processor adjusts said volume of said multimedia content utilizing one or more of: a wireless signal, a wired signal, and a voice command.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary system for controlling volume settings for a multimedia device, in accordance with an embodiment of the invention.

FIG. 2 is a block diagram illustrating an exemplary volume memory setting implementation for a multimedia device, in accordance with an embodiment of the invention.

FIG. 3 is a flow diagram illustrating exemplary steps for playback volume adjustment in a multimedia device, in accordance with an embodiment of the invention.

FIG. 4 is a flow diagram illustrating exemplary steps for playback volume memory setting in a multimedia device, in accordance with an embodiment of the invention.

### DETAILED DESCRIPTION OF THE INVENTION

Certain embodiments of the invention may be found in a method and system for controlling volume settings for a multimedia device. In an aspect of the invention, playback volume of multimedia content for a selected channel may be adjusted based on a determined identity of the selected channel presenting the multimedia content and a determined identity of a program associated with the multimedia content. The multimedia device may be tuned to the selected channel and program and the playback volume setting stored to memory. The playback volume setting may be stored in association with the selected channel identity, program identity and/or user identity. In instances where the playback volume setting may be adjusted to a new volume setting, the playback volume setting stored to the memory record may be updated with the new volume setting.

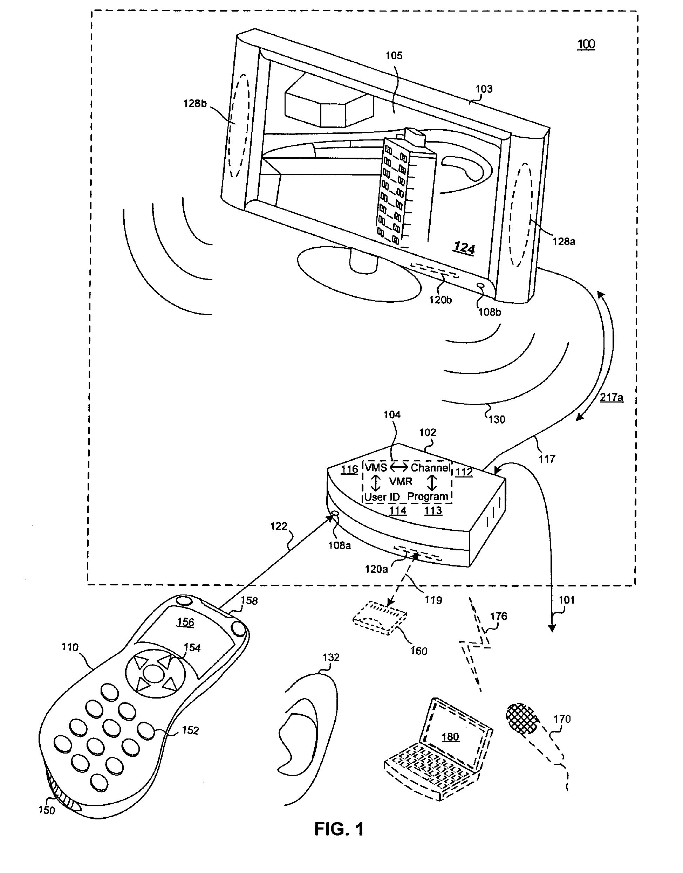

FIG. 1 is a block diagram illustrating an exemplary system for controlling volume settings for a multimedia device, in accordance with an embodiment of the invention. Referring to FIG 1, there is shown a multimedia device 100, a remote control device 110, a user 132 and a plurality of optional I/O devices such as a host or memory device 160, wireless devices such as a sound device 170 or a Bluetooth device 180.

The multimedia device 100 may comprise a TV platform (TVP) 103, and a receiver 102 with built in volume memory setting VMS function. The TV platform (TVP) 103 may comprise a video display 105, a receiver interface 108b, an optional I/O interface 120b and one or more speakers 128a, 128b. The receiver 102 with built in volume memory setting VMS function may comprise an internal or external memory block that may store one or more Volume Memory Record (VMR) 104, a receiver interface 108a and optionally an I/O interface 120a. Although the receiver 102 is shown separate from the TV platform 103, the invention is not so limited. Accordingly, the receiver 102 may be integrated within the TV platform 103. The remote control device 110 may be a remote controller that may comprise a plurality of numerical selection buttons 152, an adjustment dial 154, a display 156, a transmitter 158 and an optional I/O interface 150.

The multimedia device 100 may comprise of a TV platform (TVP) 103 coupled to a receiver 102 with built in VMS function. In another embodiment, the multimedia device 100 may comprise of a TVP 103 with an integrated receiver 102 with built in VMS function. In an exemplary embodiment of the invention, the multimedia content signal 101 communicated to the multimedia device 100 may run over OCAP^{TM} standard, Internet protocol standard or other suitable content programming standards. The multimedia content signal 101 may be scrambled to discourage pirating. Some of the multimedia devices 100 may be a High Definition TV (HDTV), digital video recorders (DVRs), IPTV, video monitor or an integrated TV set top box, DVD player, CD player, radio, MP3 player, game console, portable video devices, mobile phones, personal computers or wireless devices.

The TVP 103 may be a HDTV comprising a video display 105 to display multimedia content 124 of the selected channel and offered program. The TVP 103 may comprise a receiver interface 108b that communicates with the remote control device 110 and/or with an optional I/O interface 120b to communicate I/O data with a plurality of external devices such as a host or memory device 160, a sound device 170 or a Bluetooth device 180. One or more speakers 128a and 128b may transmit audio content at a playback volume level 130 according to a VMS 116 stored in a VMR 104 in the receiver 102.

The receiver 102 shown may be a set top box (STB) with information of VMS 116 stored to the VMR 104. The information of VMS 116 may comprise playback volume setting of multimedia content 124 in association with identities such as selected channel 112, program 113 or optionally a user ID 114 stored to the VMR 104. The identity of the selected channel 112 may be the channel number. The identity of the program 113 may be a program code to be broadcasted on a certain day and time of the week at the selected channel 112, such as a news program or a movie. The User ID 114 may be an arbitrary user assignment that may be used to differentiate the setting preferences from user to user who shares the same remote controller device 110. For example, the parents' VMS 116 may differ from their children who share the same remote control device 110. Therefore with the same selected channel 112 and program 113 there may be a need to have a VMR 104 that corresponds to the VMS 116 based the user ID 114.

The receiver 102 may descramble multimedia content signal 101 in response to a tune command 122 from the remote control device 110 or upon receiving I/O data from the host or memory device 160. The tune command signal 122 may identify the channel 112 to enable descrambling of the signals to program 112 or optionally the user ID 114 of the user 132. The VMS 116 may be retrieved from the VMR 104 to set the volume level 130 of the multimedia content 124. The VMS 116 may associate the identity of the selected channel 112, the program 112 or optionally the user ID 114 and may be communicated along with the descrambled multimedia signal 117a to the TVP 103.

The multimedia content signal 101 may be in one of the various "Program Offer Database" standards such as the OCAP™ format. The OCAP™ format may allow the receiver 102 to know the program broadcast schedule including a precise time when a specific program offer starts and ends. The selected program 113 may be associated with the broadcast schedule and any pertinent information on the identity of the program. Knowledge of the program 113 may enable the receiver 102 to "remember" the VMS 116 for the selected program 113 by retrieving the VMS 116 stored to the VMR 104 during subsequent tuning back to the selected program 113.

A plurality of optional I/O devices may be a host or memory device 160, sound device 170 or wireless Bluetooth device 180 coupled to I/O interfaces 120a or 120b. The host or memory device 160 may be a Cablecard, a memory card, a handheld computer, a wireless device, or any suitable network device. In another embodiment of the invention, the host or memory device 160 may integrate most of the functions of the receiver 102 including the VMS function so that it may replace the use of a STB or a receiver 102 when coupled to the I/O interface 120a or 120b. The I/O data 119, tuning command 122 and multimedia content signals 101, 217a may be unidirectional or bidirectional.

The user 132 may use the remote control device 110 to select channel 112 to watch a favorite program 113 using the numerical buttons 152. If the playback volume level 130 may not be desirable, the user 132 may adjust the playback volume level 130 using the dial 114. A tune command 122 may be intercepted by the receiver interface 108a via infra red, Bluetooth or any suitable wireless communication 176. The wireless transmission 176 may be through an internet network. In another embodiment of the invention, the tune command 122 may be activated by voice or through the sound device 170 using Artificial Intelligence (AI) or a speech recognition software. The speech recognition software may be capable of converting spoken words into written text through speech or a sound device 170 such as a microphone.

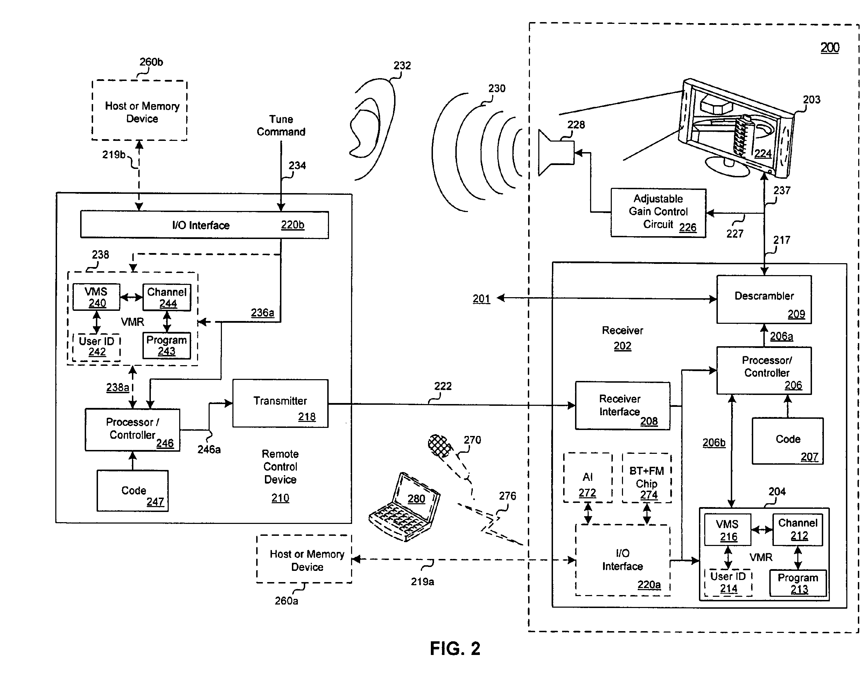

FIG. 2 is a block diagram illustrating an exemplary volume memory setting implementation for a multimedia device in accordance with an embodiment of the invention. Referring to FIG. 2, there is shown a multimedia device 200, a remote control device 210, and a user 232 and a plurality of optional I/O devices such as host or memory devices 260a, 260b, wireless devices such as a sound device 270 or a Bluetooth device 280.

The multimedia device 200 may comprise a TVP 203 and a receiver 202. The TVP 203 may comprise one or more speakers 228 with an adjustable gain control circuit 226 to amplify or adjust the audio multimedia content to a desired playback volume level 230. The receiver 202 may comprise a receiver interface 208, an optional I/O Interface 220a with an optional Artificial Intelligence module (AI) 272 or Bluetooth and FM chip 274, a memory block with Volume Memory Record VMR 204 and executable code 207, a processor 206 and a descrambler 209. The remote control device 210 may comprise an I/O interface 220b, an optional VMR 238, a processor/controller 246, code 247 and a transmitter 218.

The multimedia device 200 may comprise software and hardware realized in a distributed or integrated manner. For example, in the distributed manner, a multimedia device 200 may comprise hardware including a TVP 203 communicating signal 217 with the receiver 202. The software may comprise suitable executable codes 207 in the form of software, firmware, microcode or silicon device logic gates. The codes 207 may reside internal to the processor/controller 206, external to the processor/controller 206 or may be run external to the multimedia device 200 through a host or memory device 260a. An output 206b from the processor/controller 206 may update the VMS 216 stored in the VMR 204.

In the integrated manner, the functions of the receiver 202 may be integrated into an integrated TVP 203 such that the remote control device 210 may communicate directly to the TVP 203. For example, the multimedia device 200 may comprise a TVP 203 coupled to a host or memory device 260a such as a Cablecard replacing the receiver 202 with integrated VMS function internal to the host or memory device 260a.

The receiver 202 may comprise an Infra red receiver interface 208. The optional I/O interface 220a may be any suitable interface such as a USB serial port, PCMCIA, or Cablecard communicating data 219a with a host or memory device 260a. An optional Artificial Intelligence module 208 (AI) or a Bluetooth FM chip may communicate with the I/O interface 220a for communication to wireless devices using voice command, sound device 270 or Bluetooth device 280.

The volume memory setting VMS 216 stored to the VMR 204 may have a factory default playback volume setting level or may use a previous playback volume level 230 as a default setting for the programs of any selected channels. The VMS 216 may update and associate any changes to the playback volume level 230 with identities such as selected channel 212, program 213 or optionally user ID 214 in the VMR 204. The changes may be communicated from the receiver interface 208 or the I/O interface 220a. If a user 232 changes to a different channel to watch other programs momentarily, upon subsequent return to the selected channel 212 and program 213, the volume level 230 of the multimedia content 224 on the TVP 203 may be restored by retrieving the setting of the VMS 216 last stored to the VMR 204.

If subsequent tuning to other channels and no volume changes have been made for the new program, then the current volume level 230 for the TVP 203 may be used as a default VMS 216 setting to the programs to other channels. The VMS 216 setting of a program may be determined by one of a plurality of ways: the last modified input from the user 232 through the tuning command 222, the I/O data 219a, or wireless communication 276; the most used historical settings; a statistical weighted average of historical settings or an arbitrary setting. In an embodiment of the invention, a default VMS for future programs may use the most chosen VMS in the VMR database or in combination with the knowledge of user ID 214. The user ID may be used to differentiate one user's VMS from another user's VMS in the respective VMR. The user ID may comprise of personalized code, user number, voice recognition or biometric data.

The code 207 may comprise an algorithm, which may be utilized to process the available inputs from the receiver 208, and optionally the I/O interface 220a or retrieved VMS 216 values. The code 207 may process or update a new VMS 216 for playback volume level 230.

The processor/controller 206 may comprise suitable logic, circuitry, and/or code that enable processing and generating outputs 206a and 206b in response to inputs from the receiver interface 208, the optional I/O interface 220a, the retrieved VMS 216 from VMR 204 and processing codes 207. The output 206a may comprise information to select channel 212, program 213, and setting the multimedia content 224 to playback volume level 230. In response to the output 206a, the descrambler 209 may descramble the OCAP™ signal 201 into signal 217. The signal 217 may comprise descrambled video content 237 and audio content 227. The video content 237 may display multimedia content 224 of selected channel 212 of program 213. The speaker 228 may output the audio content 227 at a substantially constant playback volume level 230 according to the VMS 216 through the regulation of an adjustable gain control circuit 226.

The remote control device 210 may be a remote controller. The tune command 234 may be initiated by the user 232 by pressing the selection buttons 152 or dial 154 described with respect to FIG. 1. The I/O interface 220b may translate the selection into digital signal to correspond to certain channel, program or volume setting selection. The optional VMR 238 may include stored values of VMS 240 from the remote control device 210 that may facilitate setting the multimedia device 200 to the desired playback volume level 230. The VMR 238 in the remote control device 210 may have similar functionality described in the receiver 202. The processor/controller 246 may receive inputs 236a from a tune command 236a or input 238a from the VMR 238 in order to process an output 246a based on executing suitable codes 247. The transmitter 218 may transmit an output as tune command 222 to the receiver 202.

In an alternate embodiment of the invention, the remote control device 210 may be capable of receiving tune commands through an external host or memory device 260b. The I/O data 219b from the host or memory device 260b may be a serial input from a host computer, a flash memory, a handheld device or from an Internet network download. The I/O data 219b may be unidirectional or bidirectional. The transmission medium of communication links may be wired and/or wireless. Exemplary wireless communication links may comprise Bluetooth or optical links such as infrared.

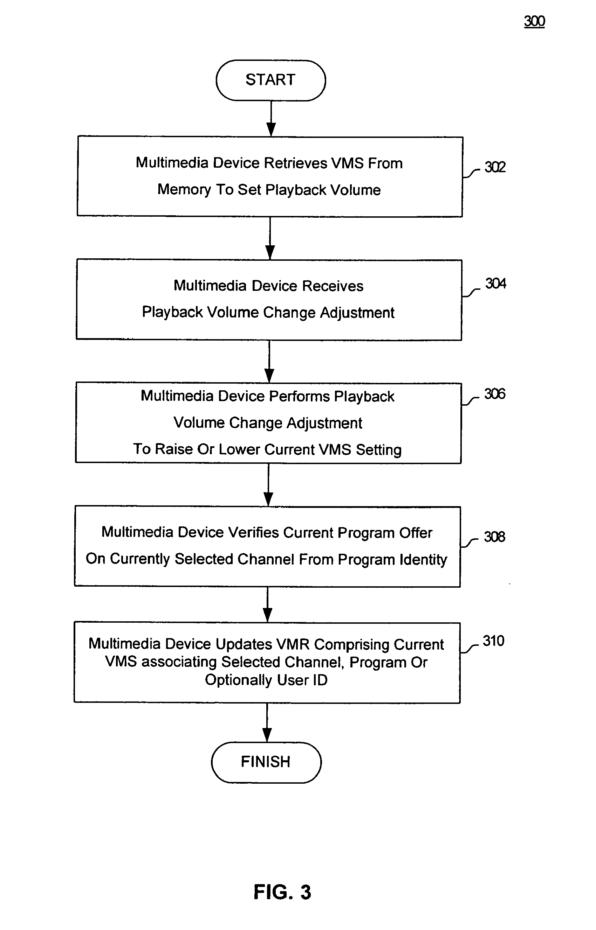

FIG. 3 is a flow diagram illustrating exemplary steps for playback volume adjustment in a multimedia device 200, in accordance with an embodiment of the invention. At step 302, the multimedia device 200 may retrieve VMS 216 from memory VMR 204 to set playback volume. At step 304, multimedia device receives playback volume change adjustment. If the user 232 wishes to change the playback volume level 230, the user 232 may initiate a tune command 222. to raise or lower volume level via a remote control device 210, using an infrared remote, a keyboard, an I/O device, and/or protocol. At step 306, the multimedia device 200 may perform playback volume change adjustment to raise or lower current VMS 216 setting. At step 308, the multimedia device 200 may verify the current program 213 offered on the currently selected channel 212 from program identity. At step 310, the multimedia device 200 may update a Volume Memory Record VMR 204 comprising the current VMS 216 associating selected channel 212, program 213 or optionally user ID 214. For example, the association may comprise an association to a time slot or window, during which the current program 213 offer is available for viewing.

In accordance with an embodiment of the invention, a VMR 204 may exist for each channel. If no volume changes have been made for the current program 213 on a given channel 212, then the current playback volume level 230 setting for the multimedia device 200 may be used for other channel changes in case there may be no VMS 216 to other channels.

In accordance with an embodiment of the invention, a VMR 204 may be associated for each channel 212 since the current program 213 offer for each channel 212 may have a current VMS 216. However, the present invention may not be so limited and multiple VMS 216 may be stored or pre-programmed for a given program 213. In this regard, multiple VMR 204 for past or future program offers may be designed or set to using preset or a default VMS 216.

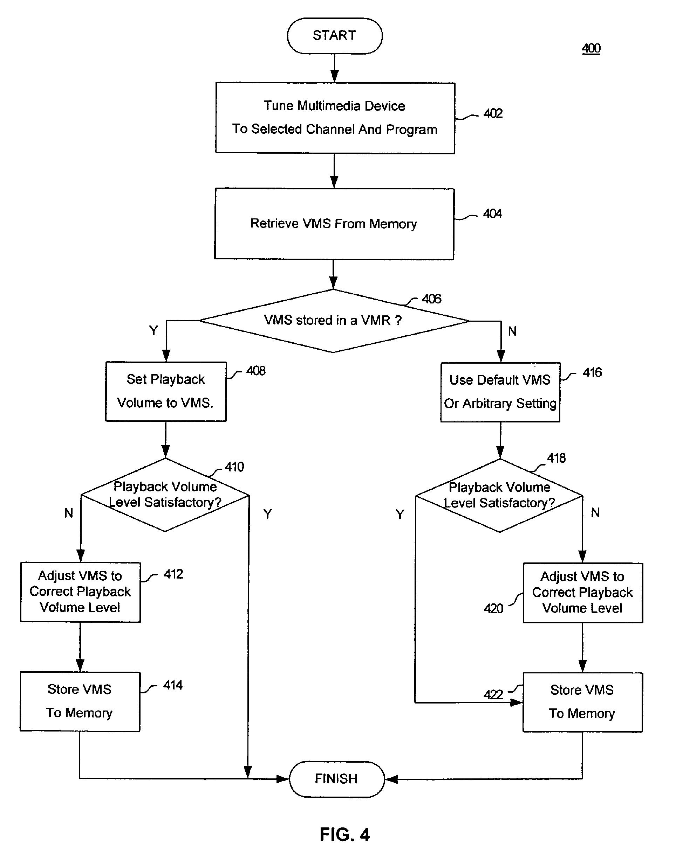

FIG. 4 is a flow diagram illustrating exemplary steps for volume memory setting in a multimedia device, in accordance with an embodiment of the invention. Referring to the flow diagram 400 in FIG. 4, at step 402, the multimedia device 200 may be tuned to a selected channel and program. For example, the multimedia device 200 may be tuned to a selected channel 212 and program 213. At step 404, the VMS 216 may be retrieved from memory. The multimedia device 200 may retrieve the VMS 216 in order to set playback volume for the multimedia content 224. At step 406, it may be determined whether a VMS may be stored in a VMR. For example, it may be determined whether a VMS 216 may be stored in a VMR 204 for the program 213 offered in channel 212. If a VMS 216 is stored in a VMR 204, at step 408, the playback volume 230 may be set to the VMS 216. The current playback volume level 230 may be set according to the VMS 216.

In step 410, it may be determined whether the playback volume level 230 may be satisfactory. If satisfactory, the adjustment may not be needed and the VMS 216 remains unchanged and the volume setting may be finished. If the playback volume level is not satisfactory, in step 412, the VMS 216 may be adjusted to correct playback volume level. The user 232 may initiate a tuning command 222 to adjust VMS 216 to a correct playback volume level. In step 414, store VMS 216 to memory VMR 204. The new volume level 230 after VMS 216 adjustment may associate information from the channel 212, program 213 and optionally user ID 214 to update the VMR 204 in memory and the playback volume memory setting may be completed.

Referring to step 406, if a VMS 216 is not stored in a VMR 204, at step 416, the multimedia device 200 may use default VMS or arbitrary setting. The playback volume may remain unchanged as a default VMS, or may use an arbitrary setting in the VMR 204 as a default VMS. In step 418, the user 232 may check whether the default playback volume level may be satisfactory. If playback volume level is satisfactory, in step 422, the VMS 216 may be stored to memory. The default setting for the playback volume level 230 may be set as the VMS 216 and stored into VMR 204 for future or subsequent retrieval. If the playback volume level is not satisfactory, in step 420, the VMS 216 may be adjusted to the correct playback volume level 230. The user 232 may initiate a tuning command 222 to adjust VMS 216 to the correct playback volume level. In step 422, the VMS 216 may be stored to memory VMR 204. The new volume level 230 after VMS 216 adjustment may associate information from the channel 212, program 213 and optionally user ID 214 to update the VMR 204 in memory and the playback volume memory setting may be completed.

The steps of the process in FIGs 3 to 4 may be rearranged in a different order or substituted with similar or equivalent operation to accomplish the same playback volume adjustment or process without departing from the scope and spirit of the invention.

In accordance with various embodiments of the invention, the method of controlling operation of a multimedia device 200 may comprise adjusting playback volume 230 of multimedia content 224 for a selected channel 212 based on a determined identity of the selected channel 212 presenting the multimedia content 224 and a determined identity of a program 213 associated with the multimedia content 224. The controlling operation may comprise tuning the multimedia device 200 to the selected channel 212 or storing to memory 204 the adjusted playback volume 230 of the multimedia content 224. The stored adjusted playback volume 230 may be associated with one or more identities comprising the selected channel 212 identity, the program 213 identity and/or one or more user identities 214. The stored adjusted playback volume 230 may be retrieved for subsequent playback of the multimedia content 224. During subsequent playback, the stored adjusted playback volume 230 after retrieval may be further adjusted. The adjusting of playback volume 230 of the multimedia content 224 may utilize one or more of a wireless signal 276, wired signal and/or a voice command.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for controlling operation of a multimedia device, the method comprising: adjusting playback volume of multimedia content for a selected channel based on a determined identity of said selected channel presenting said multimedia content and a determined identity of a program associated with said multimedia content.

2. The method according to claim 1, comprising tuning to said selected channel.

3. The method according to claim 1, comprising storing to memory, said adjusted playback volume of said multimedia content.

4. The method according to claim 3, comprising storing to memory, said determined identity of said channel presenting said multimedia content.

5. The method according to claim 4, comprising storing to memory, said a determined identity of said program associated with said multimedia content.

6. The method according to claim 5, comprising creating an association between said stored adjusted playback volume of said multimedia content, said determined identity of said channel presenting said multimedia content, and said determined identity of said program associated with said multimedia content.

7. A machine-readable storage having stored thereon, a computer program having at least one code section for controlling operation of a multimedia device, the at least one code section being executable by a machine for causing the machine to perform steps comprising, adjusting playback volume of multimedia content for a selected channel based on a determined identity of said selected channel presenting said multimedia content and a determined identity of a program associated with said multimedia content.

8. A system for controlling operation of a multimedia device, the system comprising: at least one processor that adjusts playback volume of multimedia content for a selected channel based on a determined identity of said selected channel presenting said multimedia content and a determined identity of a program associated with said multimedia content.

9. The system according to claim 8, wherein said at least one processor tunes to said selected channel.

10. The system according to claim 8, wherein said at least one processor stores to memory, said adjusted playback volume of said multimedia content.
